# EUROPÄISCHE PATENTSCHRIFT

(11) **EP 2 342 799 B1**
(45) Veröffentlichungstag und Bekanntmachung des Hinweises auf die Patenterteilung: **17.06.2015**
(21) Anmeldenummer: 09781809.0
(22) Anmeldetag: 13.08.2009
(51) Int. Cl.: H02K 11/04

(54) **ELEKTRISCHE MASCHINE MIT EINEM KONTAKTELEMENT ZUR ELEKTRISCHEN VERBINDUNG ELEKTRISCHER BAUTEILE**
ELECTRICAL MACHINE HAVING A CONTACT ELEMENT FOR ELECTRICALLY CONNECTING ELECTRICAL COMPONENTS
MACHINE ÉLECTRIQUE PRÉSENTANT UN ÉLÉMENT DE CONTACT POUR LA CONNEXION ÉLECTRIQUE DE COMPOSANTS ÉLECTRIQUES

(30) Priorität: 30.09.2008 DE 102008042504
(43) Veröffentlichungstag der Anmeldung: 13.07.2011
(73) Patentinhaber: Robert Bosch GmbH, 70442 Stuttgart (DE)
(72) Erfinder: AMARAL, Daniel, Brasilien (BR)
(86) Internationale Anmeldenummer: PCT/EP2009/060505
(87) Internationale Veröffentlichungsnummer: WO 2010/037592

(56) Entgegenhaltungen:
- WO-A-89/02161
- DE-A1- 2 649 429
- DE-A1- 3 345 272

## Beschreibung

Die Erfindung betrifft eine elektrische Maschine, insbesondere Generator, vorzugsweise Klauenpolgenerator, mit einem Kontaktelement zur elektrischen Verbindung elektrischer Bauteile, das aus einem im Wesentlichen bogenförmigen, elektrisch nicht leitenden Bogenendbereichen aufweisenden Substrat, mit elektrischen Leitern zur Bauteilverbindung besteht.

### Stand der Technik

Es ist bekannt, in elektrischen Maschinen Kontaktelemente zur elektrischen Verbindung elektrischer Bauteile einzusetzen.

Die EP 0 960 464 beschreibt eine elektrische Maschine mit einem Kontaktelement, welches im Wesentlichen bogenförmig ausgestaltet ist und Bogenendbereiche aufweist. Das Kontaktelement weist mehrere Leiter auf, die innerhalb eines Substrats des Kontaktelements verlaufen. In dem Kontaktelement ist ein Leiter vorgesehen, welcher sich innerhalb des Substrats von einem Bogenendbereich zu dem anderen Bogenendbereich erstreckt. Dabei erstreckt sich der Leiter mit einem winkelförmigen Verlauf durch das Substrat hindurch. Der winkelförmige Verlauf wird benötigt, damit der Leiter nicht mit anderen innerhalb des Substrats befindlichen Leitern in elektrischen Kontakt tritt und somit einen Kurzschluss erzeugt. Dies führt zu einer sehr komplexen Leitungsgeometrie, die aufwendig herzustellen ist und bei Installation innerhalb des Substrats hohe Sorgfalt benötigt. Ferner ergibt der winkelförmige Verlauf innerhalb des Substrats aufgrund des bogenförmigen Verlaufs des Kontaktelements eine große Leitungslänge, welche zu Leitungsverlusten führt. Benötigt wird ein Kontaktelement, welches in einfacher und sicherer Weise herzustellen ist und Leitungsverluste gegenüber dem Stand der Technik verringert.

Aus der DE 26 49 429 A1 ist weiterhin bereits eine Gleichrichtervorrichtung für Wechselstromgeneratoren bekannt, die einen kreisbogenförmig ausgebildeten Isolierkörper enthält. Der Isolierkörper trägt Verbindungsglieder zum Anschließen von Gleichrichterelementen und Windungsanschlüssen und Befestigungselementen zum Befestigen von Kühlrippen einer Gleichrichtervorrichtung.

Außerdem offenbart die DE 33 45 272 A2 bereits eine Ankerwicklung für eine stromrichtergespeiste elektrische Drehfeldmaschine.

### Offenbarung der Erfindung

Die Erfindung mit den Merkmalen des Anspruchs 1 sieht vor, dass mindestens einer der elektrischen Leiter als Außenverbindungsleiter ausgebildet ist, der außerhalb des Substrats von einem Bogenendbereich zum anderen Bogenendbereich verläuft. Somit ergibt sich im Wesentlichen ein direkter Verlauf des Außenverbindungsleiters von einem der Bogenendbereiche zum anderen Bogenendbereich. Es ergibt sich eine Leitungsverkürzung, welche zu geringen Leitungsverlusten führt. Ferner wird die Herstellung des Kontaktelements einfacher und wirtschaftlicher gestaltet, da das Substrat den Kontaktleiter nicht umschließen muss und somit nur wenig Substrat benötigt wird. Gleichzeitig kann die Geometrie des Außenverbindungsleiters gegenüber einem im Substrat angeordneten Leiter stark vereinfacht werden, was zu weiteren Vereinfachungen im Herstellungsprozess führt. Auch wird eine Gefahr eines Kurzschlusses zwischen dem Außenverbindungsleiter und anderen im Substrat angeordneten Leitern minimiert oder vollständig ausgeräumt. Um eine elektrische Verbindung des Außenleiters mit weiteren Komponenten innerhalb der elektrischen Maschine zu verhindern, ist es vorzugsweise vorgesehen, den Außenverbindungsleiter mit einem Isoliermaterial zu versehen, derart, dass der Außenverbindungsleiter im Bereich zwischen den Bogenendbereichen nach außen hin isoliert ist und innerhalb der Bogenendbereiche elektrisch kontaktiert und/oder kontaktierbar ist.

Nach einer Weiterbildung der Erfindung ist vorgesehen, dass der zwischen den Bogenendbereichen liegende Verlauf des Außenverbindungsleiters bogensehnenartig, bogenartig und/oder winkelförmig ausgebildet ist. Die Ausbildung des Verlaufs des Außenverbindungsleiters zwischen den Bogenendbereichen ermöglicht eine Anpassung an eine Geometrie der elektrischen Maschine in dem Bereich, in dem das Kontaktelement eingesetzt wird. Der bogensehnenartige Verlauf ergibt den Außenverbindungsleiter mit der geringsten Leitungslänge, da die Bogenendbereiche auf direktem Weg miteinander verbunden werden. Der bogenartige und der winkelförmige Verlauf bieten dagegen die Möglichkeit, den Außenverbindungsleiter auf die elektrische Maschine anzupassen. Der Verlauf des Außenverbindungsleiters soll dabei möglichst kurz sein und eine möglichst einfache Verlaufsform annehmen, um auf diese Weise einen Herstellungsprozess vereinfachen zu können.

Nach einer Weiterbildung der Erfindung ist vorgesehen, dass bei bogenartig ausgebildetem Außenverbindungsleiter seine Bogenform gegensinnig zum bogenförmigen Verlauf des Kontaktelements liegt. Dies führt dazu, dass das Kontaktelement mit seinem Substrat und dem Außenverbindungsleiter eine besonders große Öffnung umschließt, welche Bauelemente der elektrischen Maschine aufnehmen kann. Es bildet sich somit im Gesamten eine geschlossene, ringartige Struktur, die eine optimale Platzierung des Kontaktelements innerhalb der elektrischen Maschine ermöglicht.

Nach einer Weiterbildung der Erfindung ist vorgesehen, dass mindestens ein Leiter, vorzugsweise der Außenverbindungsleiter, ein Massivleiter ist. Die Ausgestaltung der Leiter als Massivleiter führt zu einer Eigensteifigkeit der Leiter. Insbesondere im Falle des Außenverbindungsleiters führt dies dazu, dass er den vorgegebenen Verlauf selbstständig beibehält, ohne sich aufgrund einer Kräfteeinwirkung zu verformen. Ferner ist es möglich, den Außenverbindungsleiter im Vorfeld in Form zu bringen und im Verlauf des Herstellungsprozesses in das Substrat einzusetzen. Insbesondere kann der Massivleiter als Stanzteil ausgebildet sein.

Nach einer Weiterbildung der Erfindung sind Mittel vorgesehen, die einen Kühlluftstrom in der elektrischen Maschine bewirken. Diese Mittel können beispielsweise als Lüfterräder ausgebildet sein. Der Kühlluftstrom kühlt vorzugsweise die gesamte elektrische Maschine in ihrem Innern.

Nach einer Weiterbildung der Erfindung ist vorgesehen, dass das Kontaktelement im Wesentlichen im Kühlluftstrom angeordnet ist und dass der Außenverbindungsleiter außerhalb des Kühlluftstroms angeordnet ist. Diese Art der Anordnung ermöglicht, dass der Außenverbindungsleiter den Kühlluftstrom in seiner Kühlfunktion nicht beeinträchtigt und dieser das Substrat optimal kühlen kann. Ferner ist vorteilhaft, wenn der Außenverbindungsleiter innerhalb der elektrischen Maschine derart angeordnet ist, dass der Kühlluftstrom in seiner Aufgabe zur Kühlung der elektrischen Maschine nicht beeinträchtigt wird.

Nach einer Weiterbildung der Erfindung ist ein Stator vorgesehen, der mindestens fünf Wicklungsstränge aufweist, wobei das Kontaktelement mit den Wicklungssträngen eine Pentagrammschaltung bildet.

Nach einer Weiterbildung der Erfindung ist vorgesehen, dass mindestens zwei der Wicklungsstränge der Pentagrammschaltung durch das Außenleiterelement miteinander elektrisch verbunden sind. Die Pentagrammschaltung verknüpft fünf Wicklungsstränge, welche winkelversetzt zueinander an einem Stator angeordnet sind. Zu diesem Zweck wird jeder Wicklungsstrang mit einem in Umfangsrichtung gesehen übernächsten Wicklungsstrang elektrisch verbunden. Aufgrund der ungeraden Anzahl ergibt es sich, dass die Wicklungsstränge in einer Reihenschaltung geschaltet sind, wobei der letzte Wicklungsstrang mit dem ersten Wicklungsstrang verbunden ist, sodass sich ein elektrischer Kreislauf ergibt. Dabei ist die Position der Wicklungsstränge innerhalb der Schaltung von der Position des Wicklungsstrangs im Stator unterschiedlich, sodass der letzte Wicklungsstrang mit dem ersten Wicklungsstrang nicht wie die anderen Wicklungsstränge verbunden werden kann. Typischerweise sind der erste und der letzte Wicklungsstrang im Stator voneinander beabstandet angeordnet, sodass zur Überbrückung dieses Abstands ein Leiter benötigt wird. Dies kann in vorteilhafter Weise mittels des Außenverbindungsleiters geschehen, da dieser eine direkte und eine besonders kurze Verbindung zwischen beiden Wicklungssträngen herstellen kann. Dabei wird in vorteilhafter Weise ein Widerstandsgleichgewicht innerhalb des Stators beibehalten, sodass negative Auswirkungen auf eine Geräuschentwicklung der elektrischen Maschine vermieden werden. Ferner können aufwendige Verdrahtungstechniken innerhalb des Stators, welche die beiden Wicklungsstränge innerhalb des Stators miteinander verbinden würden, verhindert werden und durch den Außenverbindungsleiter ersetzt werden.

Nach einer Weiterbildung der Erfindung ist vorgesehen, dass das Kontaktelement ein Steckkontaktelement ist. Das Kontaktelement kann in dieser Ausführungsform in die elektrische Maschine eingesteckt werden, um an ihrem Einsatzort installiert zu werden. Insbesondere ist vorgesehen, dass eine Steckverbindung des Steckkontaktelements mit den Bauelementen vorgenommen wird, sodass sich durch ein Einstecken des Kontaktelements in die elektrische Maschine das Kontaktelement mit den Bauteilen elektrisch verbindet. Dies führt zu einer einfachen Herstellung sowie einer einfachen Wartungs- und Austauschmöglichkeit des Kontaktelements innerhalb der elektrischen Maschine.

Nach einer Weiterbildung der Erfindung ist vorgesehen, dass das Kontaktelement mit den Bauteilen einen elektrischen Gleichrichter bildet. Dabei ist insbesondere vorgesehen, dass die Bauteile Dioden sind. In diesem Fall sind die einzelnen Leiter innerhalb des Kontaktelements derart angeordnet, dass sie mehrere Dioden zu einem Gleichrichter verbinden können. Der Gleichrichter dient vorzugsweise der Gleichrichtung einer vom Generator erzeugten Wechselspannung in eine Gleichspannung. Aus diesem Grund muss der Gleichrichter nicht nur mit den Bauteilen in Form von Dioden, sondern auch mit dem Stator verbunden sein. Unter dem Begriff Bauteil werden auch Wicklungsstränge des Stators verstanden. Dies ist insbesondere dann vorteilhaft, wenn zwei Wicklungsstränge mittels des Außenleiterelements verbunden werden, da in diesem Fall bereits eine Verbindung zweier Stränge mit dem Kontaktelement besteht.

Nach einer Weiterbildung der Erfindung ist ein Gleichrichtermodul vorgesehen, dass den Gleichrichter, mindestens eine Grundplatte und mindestens einen Kühlkörper aufweist. Dieses Gleichrichtermodul bildet vorzugsweise eine kompakte Einheit, welche vorinstalliert in die elektrische Maschine eingebaut werden kann. Es ist von Vorteil, wenn die Bauteile, insbesondere die Dioden, mindestens teilweise im Gleichrichtermodul und/oder im Kühlkörper angeordnet sind. In diesem Fall besteht die Möglichkeit, dass die Bauteile eine Wärme, die sie während ihrer Verwendung entwickeln, sowohl an die Grundplatte als auch an den Kühlkörper abgeben können und gleichzeitig eine feste Einbauposition innerhalb des Gleichrichtermoduls besitzen.

In einer Weiterbildung der Erfindung ist vorgesehen, dass das Kontaktelement im Gleichrichtermodul zwischen Grundplatte und Kühlkörper angeordnet ist. Dies führt zu einem besonders schnellen Zusammenbau des Gleichrichtermoduls während des Herstellungsprozesses.

### Kurze Beschreibung der Zeichnungen

Anhand der Figuren wird eine bevorzugte Ausführungsform der Erfindung veranschaulicht. Es zeigen:
- Figur 1: einen Querschnitt eines Generators aus dem Stand der Technik,
- Figur 2: eine Pentagrammschaltung in schematischer Darstellung,
- Figur 3: eine schematische Wickelanordnung eines Stators mit fünf Wickelsträngen,
- Figur 4: ein Kontaktelement in einer Draufsicht,
- Figur 5: eine Leiteranordnung des Kontaktelements aus Figur 4,
- Figur 6: eine Explosionszeichnung eines Gleichrichtermoduls,
- Figur 7: eine perspektivische Ansicht des Gleichrichtermoduls und
- Figur 8: einen Querschnitt einer elektrischen Maschine.

### Ausführungsform(en) der Erfindung

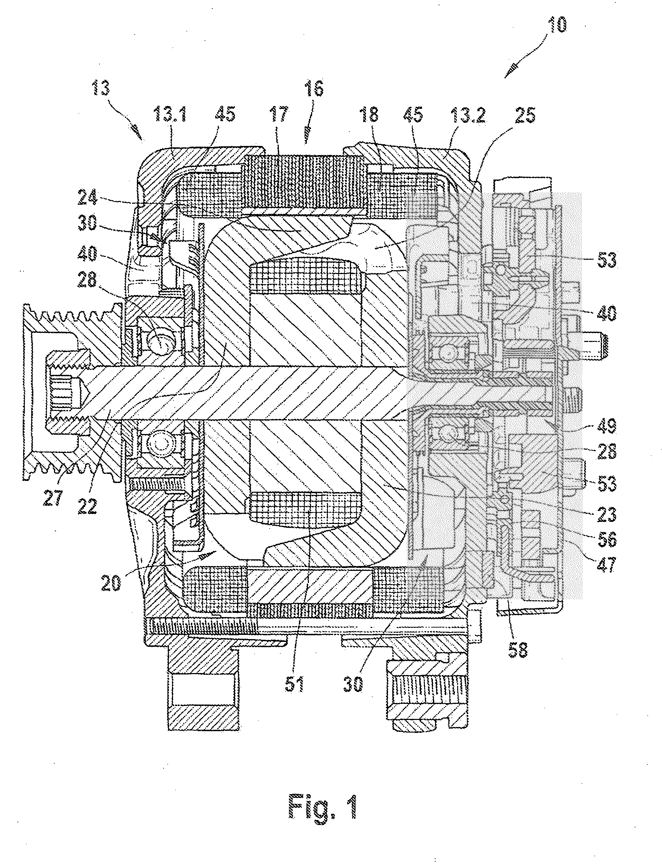

Die Figur 1 zeigt eine elektrische Maschine 10 aus dem Stand der Technik.

In Figur 1 ist ein Querschnitt durch eine elektrische Maschine 10, hier in der Ausführung als Generator beziehungsweise Drehstromgenerator für Kraftfahrzeuge, dargestellt. Diese elektrische Maschine 10 weist unter anderem ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht unter anderem aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 beziehungsweise 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 beziehungsweise 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen beziehungsweise scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten kann. Durch diesen Effekt wird der Wicklungsüberhang 45 gekühlt. Die Kühlluft nimmt nach dem Hindurchtreten durch den Wicklungsüberhang 45 beziehungsweise nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So sägt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Bröckelschaltung darzustellen.

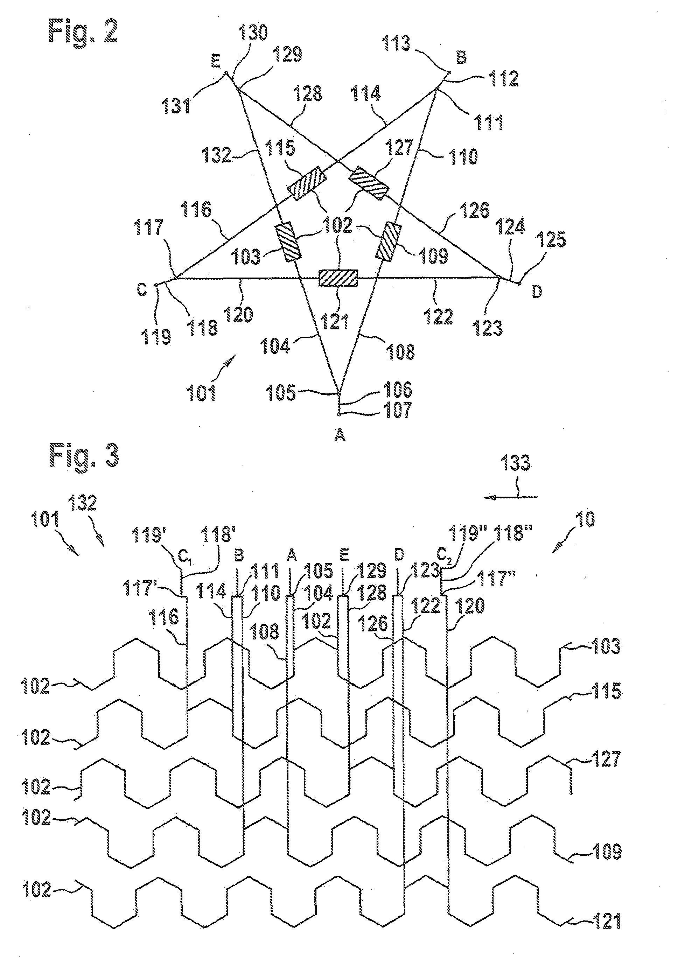

Die Figur 2 zeigt in schematischer Weise eine Pentagrammschaltung 101, welche fünf Wicklungsstränge 102 aufweist. Ein erster Wicklungsstrang 103 ist über eine Leitung 104 mit einem Knotenpunkt 105 verbunden. Ausgehend von dem Knotenpunkt 105 verläuft eine Leitung 106 zu einem Anschlusspunkt 107. Der Anschlusspunkt 107 ist mit A gekennzeichnet. Ausgehend vom Knotenpunkt 105 verläuft eine weitere Leitung 108 zu einem zweiten Wicklungsstrang 109. Vom zweiten Wicklungsstrang 109 verläuft eine Leitung 110 zu einem Knotenpunkt 111, welcher über eine Leitung 112 mit einem Anschlusspunkt 113, der mit B gekennzeichnet ist, verbunden ist. Ausgehend vom Knotenpunkt 111 verläuft eine Leitung 114 zu einem dritten Wicklungsstrang 115. Der dritte Wicklungsstrang 115 ist mittels einer Leitung 116 mit einem Knotenpunkt 117 verbunden. Von dem Knotenpunkt 117 verläuft eine Leitung 118 zu einem Anschlusspunkt 119, welcher mit C gekennzeichnet ist. Ausgehend vom Knotenpunkt 117 erstreckt sich eine Leitung 120 zu einem vierten Wicklungsstrang 121, welcher seinerseits über eine weitere Leitung 122 mit einem Knotenpunkt 123 verbunden ist. Ausgehend vom Knotenpunkt 123 verläuft eine Leitung 124 zu einem Anschlusspunkt 125, der mit D gekennzeichnet ist. Der Knotenpunkt 123 ist zusätzlich über eine Leitung 126 mit einem fünften Wicklungsstrang 127 verbunden, welcher zusätzlich über eine Leitung 128 mit einem Knotenpunkt 129 in Kontakt steht. Der Knotenpunkt 129 ist über eine Leitung 130 mit einem Anschlusspunkt 131 verbunden und über eine Leitung 132 mit dem ersten Wicklungsstrang 3, wodurch sich ein elektrischer Kreis schließt, innerhalb dessen die Wicklungsstränge 102 in Reihe geschaltet sind. Die Anschlusspunkte 107, 125, 112, 131 und 119 dienen einer Stromentnahme.

Die Figur 3 zeigt die Wicklungsstränge 102 in schematischer Darstellung untereinander angeordnet. Die Figur zeigt die Pentagrammschaltung 101 der Figur 2 in einer schematischen Umsetzung 132. Im Unterschied zu Figur 2 ist der Anschlusspunkt 119 durch zwei zusammengehörige Anschlusspunkte 119' und 119" ersetzt, welche hier nicht miteinander verbunden sind, woraus sich zwei Knotenpunkte 117' und 117" ergeben. Die Anschlusspunkte 119' und 119" sind mit C1 und C2 gekennzeichnet. In gleicher Weise ergeben sich entsprechend zwei Leitungen 118' und 118". Ein Pfeil 133 zeigt eine Wicklungsrichtung der Wicklungsstränge 102 an. Die Darstellung verdeutlicht eine zueinander verschobene Lage der Wicklungsstränge 102, wodurch die Herstellung des Knotenpunkts 117, welcher dem Anschlusspunkt 119 zugeordnet ist, einer gesonderten Maßnahme bedarf. Die anderen Knotenpunkte 111, 105, 129 und 123 können dagegen auf einfache Weise hergestellt werden.

Aufgrund der versetzt zueinander angeordneten Wicklungsstränge 102 ergibt sich, die bereits genannte Notwendigkeit, eine Verbindung zwischen den Anschlusspunkten 119' und 119" herzustellen. Dabei ist ein Gleichgewicht der Widerstände der Wicklungsstränge 102 bei der Verbindung der Anschlusspunkte 119' und 119" möglichst weitgehend beizubehalten.

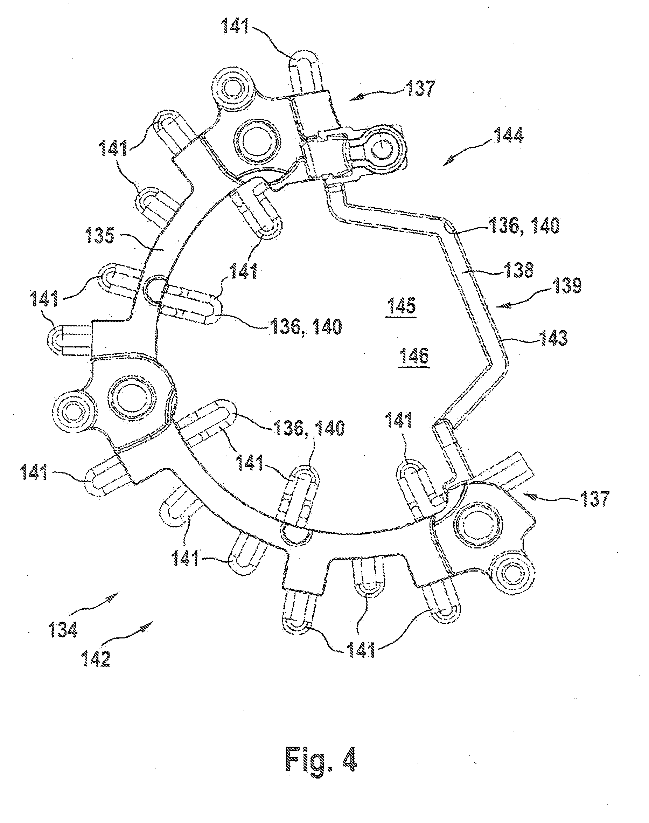

Die Figur 4 zeigt ein Kontaktelement 134 in einer Draufsicht. Das Kontaktelement 134 besteht aus einem Substrat 135, welches bogenförmig ausgebildet ist. Innerhalb des Substrats 135 verlaufen Leiter 136. Die Leiter 136 sind zueinander beabstandet angeordnet und nicht elektrisch miteinander verbunden. Das Kontaktelement 134 weist Bogenendbereiche 137 auf. Zwischen den Bogenendbereichen 137 erstreckt sich einer der Leiter 136, welcher als Außenverbindungsleiter 138 ausgebildet ist. Der Verlauf des Außenverbindungsleiters 138 ist winkelförmig ausgebildet, in der Art, dass sich ein Bogen 139 bildet, dessen Verlauf gegensinnig zum bogenförmigen Verlauf des Substrats 135 liegt. Ferner sind die Leiter 136 alle als Massivleiter 140 ausgebildet, was bedeutet, dass es sich dabei nicht um Kabel mit einer Vielzahl Drähten handelt, sondern um massives, elektrisch leitendes Material. Jeder der Leiter 136 weist mehrere Kontaktschlaufen 141 auf, welche von den Leitern 136 gebildet werden und außerhalb des Substrats 135 liegen. Die Kontaktschlaufen 141 dienen einer Kontaktierung von Bauteilen, welche vorzugsweise in die Kontaktschlaufen 141 eingesteckt werden. Somit ist das Kontaktelement 134 als Steckkontaktelement 142 ausgebildet. Der Außenverbindungsleiter 138 weist eine Isolierung 143 auf, welche sich nur zwischen den Bogenendbereichen 137 im Außenbereich des Außenverbindungsleiters 138 befindet. Ferner bilden der Außenverbindungsleiter 138 und das Substrat 135 eine ringartige Struktur 144 aufgrund der gegensinnig zueinander liegenden bogenartigen Verläufen. Die ringartige Struktur 144 schließt eine Öffnung 145 ein, welche als Ringöffnung 146 ausgebildet ist.

Aufgrund des Verlaufs des Außenverbindungsleiters 139 außerhalb des Substrats 135 ergibt sich eine sehr dünne Anordnung des Substrats 135 um die Leiter 136. Es wird kein Substrat 135 benötigt, um den Außenleiter 138 zu umschließen. Ferner verläuft der Außenverbindungsleiter 135 über einen kurzmöglichsten Weg von einem Bogenendbereich 137 zu dem anderen Bogenendbereich 137. Der winkelförmige Verlauf wird deshalb eingesetzt, da der Außenverbindungsleiter 138 an seinem Einsatzort um ein Hindernis herum verlaufen soll. Die Isolierung 143 kann als dünne Kunststoffschicht 147 oder als Lackschicht 148 ausgestaltet sein.

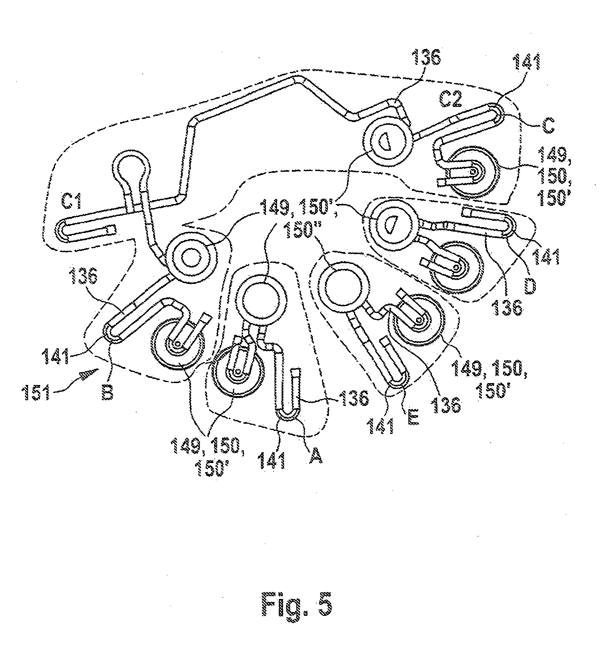

Die Figur 5 zeigt die Leiter 136, welche mit Bauteilen 149 elektrisch verbunden sind. Bei den Bauteilen 149 handelt es sich um Dioden 150. Die Bauteile 149 bilden gemeinsam mit den Dioden 150 eine Gleichrichterschaltung 151. Zu diesem Zweck sind an jedem Leiter 136 zwei Dioden 150 angeschlossen, wobei jeweils eine der angeschlossenen Dioden 150 eine Plusdiode 150' auf einer Seite des Leiters 136 und die andere der Dioden 150 eine Minusdiode 150" auf der anderen Seite des elektrischen Leiters 136 angeordnet ist. Zusätzlich besitzt jeder Leiter 136 eine Kontaktschlaufe 141, welche einem der Anschlusspunkte 107, 125, 113, 131 und 119 zugeordnet ist. Zur besseren Unterscheidbarkeit sind den entsprechenden Kontaktschlaufen 141 die Buchstabenbezeichnungen A, B, C, D und E aus der Pentagrammschaltung 101 der Figuren 2 und 3 zugeordnet. Ferner sind für das Verständnis die einzelnen Leiter 136 mit den ihnen zugeordneten Bauteilen 149 durch gestrichelte Linien umschlossen. Nur die Leiter 136 und Bauteile 149 innerhalb eines von einer der Linien umschlossenen Bereichs sind miteinander elektrisch verbunden. Elektrische Verbindungen zwischen zwei Leitern 136 sind nicht vorhanden.

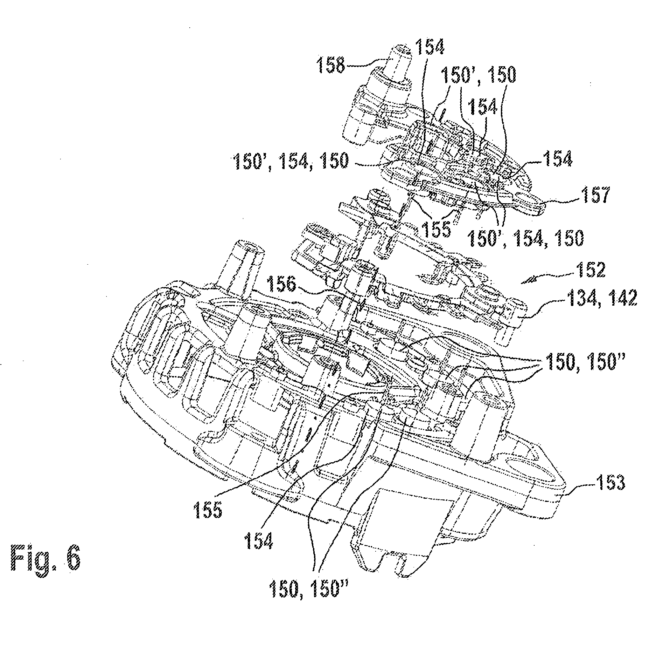

Die Figur 6 zeigt ein Gleichrichtermodul 152 in einer Explosionsdarstellung. Das Gleichrichtermodul 152 weist eine Grundplatte 153 auf, welche eine Mehrzahl an Minusdioden 150" besitzt. Es ist zu erkennen, dass jede Minusdiode 150" aus einem Diodenkörper 154 und einen Steckzapfen 155 besteht. Weiter weist das Gleichrichtermodul 152 das Kontaktelement 134 auf, welches als Steckelement 142 ausgeführt ist und entlang einer Achse 156 in die Grundplatte 153 einsteckbar ist. Zudem besitzt das Gleichrichtermodul 152 einen Kühlkörper 157, welcher Plusdioden 150' aufweist. Die Plusdioden 150' des Kühlkörpers 157 besitzen ebenfalls jeweils den Diodenkörper 154 und den Einsteckzapfen 155. Sämtliche Einsteckzapfen 155 verlaufen in paralleler Richtung zur Achse 156. Die Einsteckzapfen 155 der Minusdioden 150" der Grundplatte 153 weisen eine Orientierung auf, die der Orientierung der Steckzapfen 155 der Plusdioden 150' des Kühlkörpers 157 entgegensteht. Der Kühlkörper 157 kann auf die Grundplatte 153 aufgesteckt werden, wodurch das Kontaktelement 134 zwischen der Grundplatte 153 und dem Kühlkörper 157 angeordnet wird. Der Kühlkörper 157 weist ferner einen Batterieanschluss 158 auf. Die Minusdioden 150" oder Grundplatte 153 sind über die Grundplatte 153 elektrisch miteinander verbunden. Die Plusdioden 150' des Kühlkörpers 157 sind über den Kühlkörper 157 elektrisch miteinander verbunden.

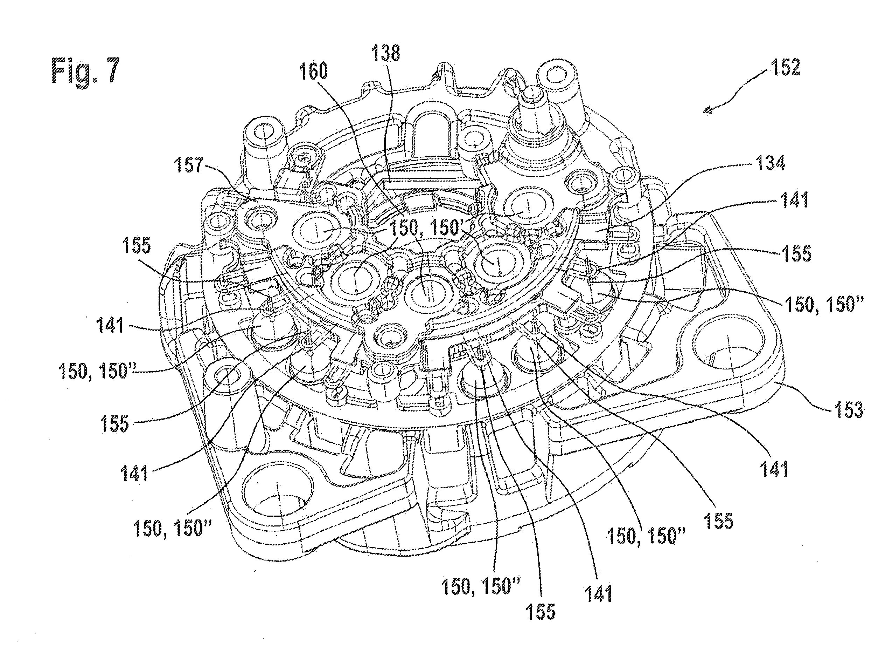

Die Figur 7 zeigt das Gleichrichtermodul 152 mit der Grundplatte 153, dem Kontaktelement 134 und dem Kühlkörper 157 in zusammengesteckter Form. In der Darstellung ist erkennbar, dass jeder Diode 150 eine Kontaktschlaufe 141 zugeordnet ist, welche mit den Einsteckzapfen 155 der Dioden 150 elektrisch verbunden sind. Nicht dargestellt ist die Verbindung der Dioden 150 des Kühlkörpers 157 mit dem Kontaktelement 134, da dies durch den Kühlkörper 157 verdeckt ist. Somit bildet das Kontaktelement 134 zusammen mit den Dioden 150 einen Gleichrichter 159, welcher in das Gleichrichtermodul 152 integriert ist. Ferner ist erkennbar, dass der Außenverbindungsleiter 138 aufgrund seines winkelförmigen Verlaufs eine Überdeckung einer Öffnung 160 in der Grundplatte 153 vermeidet. Die Öffnung 160 dient zur Aufnahme von Maschinenteilen am Einsatzort. Somit verhindert der winkelförmige Verlauf des Außenverbindungsleiters 138 eine Berührung mit den in der Öffnung 160 aufgenommenen Teilen und sorgt so für einen einfachen und problemlosen Einbau bei Herstellung des Gleichrichtermoduls 152.

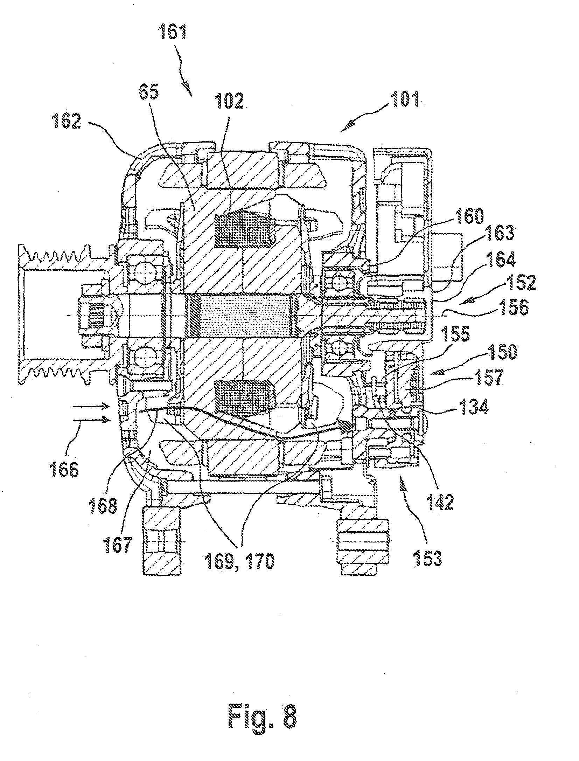

Die Figur 8 zeigt eine elektrische Maschine 161. Es handelt sich dabei um einen Generator 162 in Form eines Klauenpolgenerators 162', welcher fünf Wicklungsstränge 102 in der Pentagrammschaltung 101 der Figuren 1 und 2 besitzt. Das Gleichrichtermodul 152 ist entlang der Achse 156 axial an der elektrischen Maschine 161 angeordnet. Die Achse 156 verläuft axial durch eine Drehachse eines Rotors 165 der elektrischen Maschine 161. Innerhalb des Gleichrichtermoduls 152 ist der Kühlkörper 157 sowie das Kontaktelement 134 im Querschnitt erkennbar. Ferner ist eine Kontaktschlaufe 142 gezeigt, welche mit einem Einsteckzapfen 155 einer der Dioden 150 verbunden ist. Zum Zwecke der Installation des Gleichrichtermoduls 152 ist ein Achsenlager 163, welches eine im Wesentlichen zylinderförmige Außenfläche 164 aufweist, in die Öffnung 160 der Grundplatte 153 eingesteckt. Das eingebrachte Achsenlager 163 in der Öffnung 160 verdeutlicht den Vorteil des bogenförmigen Verlaufs des Außenverbindungsleiters 138. Ferner wird eine Einbaulage des Gleichrichtermoduls 152 dargelegt. Eingesaugte Kühlluft 166 in den Innenraum 167 der elektrischen Maschine 161 bildet einen Kühlluftstrom 168 zur Kühlung der elektrischen Maschine 161. Der Kühlluftstrom 168 wird durch Mittel 169 in Form von Lüftern 170 bewirkt. Der in Figur 8 nicht dargestellte Außenleiter 138 liegt außerhalb des Kühlluftstroms 168, sodass das Substrat 135 und die Dioden 150 ungestört gekühlt werden.

## Patentansprüche

1. Elektrische Maschine (10), insbesondere Generator (162), vorzugsweise Klauenpolgenerator (162'), mit einem Kontaktelement (134) zur elektrischen Verbindung als Dioden (150) vorliegender elektrischer Bauteile (149), das aus einem im Wesentlichen bogenförmigen, elektrisch nicht leitenden, Bogenendbereiche (137) aufweisenden Substrat (135) mit elektrischen Leitern (136) zur Bauteilverbindung besteht, wobei an jeden Leiter (136) zur Bildung einer Gleichrichterschaltung (151) zwei Dioden (150) angeschlossen und mehrere der Leiter (136) in dem Substrat (135) angeordnet sind, wobei jeweils eine der angeschlossenen Dioden (150) eine Plusdiode (150') auf einer Seite des Leiters (136) und die andere der Dioden (150) eine Minusdiode (150") auf der anderen Seite des elektrischen Leiters (136) ist, **dadurch gekennzeichnet, dass** mindestens ein weiterer der Leiter (136) als Außenverbindungsleiter (138) ausgebildet ist, der außerhalb des Substrats (135) von einem Bogenendbereich (137) zum anderen Bogenendbereich (137) verläuft.

2. Elektrische Maschine (10) nach Anspruch 1, **dadurch gekennzeichnet, dass** der zwischen den Bogenendbereichen (137) liegende Verlauf des Außenverbindungsleiters (138) bogensehnenartig, bogenartig und/oder winkelförmig ausgebildet ist.

3. Elektrische Maschine (10) nach einem der vorhergehenden Ansprüche, **dadurch gekennzeichnet, dass** bei bogenartig ausgebildetem Außenverbindungsleiter (138) seine Bogenform gegensinnig zum bogenförmigen Verlauf des Kontaktelements (134) liegt.

4. Elektrische Maschine (10) nach einem der vorhergehenden Ansprüche, **dadurch gekennzeichnet, dass** mindestens ein Leiter (136), vorzugsweise der Außenverbindungsleiter (138), ein Massivleiter (140) ist.

5. Elektrische Maschine (10) nach einem der vorhergehenden Ansprüche, **gekennzeichnet durch** Mittel (169), die einen Kühlluftstrom (168) in der elektrischen Maschine (10) bewirken.

6. Elektrische Maschine (10) nach einem der vorhergehenden Ansprüche, **gekennzeichnet durch** einen Stator (116), der mindestens fünf Wicklungsstränge (102) aufweist, wobei das Kontaktelement (134) mit den Wicklungssträngen (102) eine Pentagrammschaltung (101) bildet.

7. Elektrische Maschine (10) nach einem der vorhergehenden Ansprüche, **dadurch gekennzeichnet, dass** mindestens zwei der Wicklungsstränge (102) der Pentagrammschaltung (101) durch das Außenleiterelement (138) miteinander elektrisch verbunden sind.

8. Elektrische Maschine (10) nach einem der vorhergehenden Ansprüche, **dadurch gekennzeichnet, dass** das Kontaktelement (134) ein Steckkontaktelement (142) ist.

9. Elektrische Maschine (10) nach einem der vorhergehenden Ansprüche, **dadurch gekennzeichnet, dass** das Kontaktelement (134) mit den Bauteilen (149) einen elektrischen Gleichrichter (159) bildet.

10. Elektrische Maschine (10) nach einem der vorhergehenden Ansprüche, **gekennzeichnet durch** ein Gleichrichtermodul (52), das den Gleichrichter (159), mindestens eine Grundplatte (153), welche eine Mehrzahl an Minusdioden (150") besitzt, und mindestens einen Kühlkörper (157), welcher eine Mehrzahl an Plusdioden aufweist, aufweist.

11. Elektrische Maschine (10) nach einem der vorhergehenden Ansprüche, **dadurch gekennzeichnet, dass** das Kontaktelement (134) im Gleichrichtermodul (152) zwischen Grundplatte (153) und Kühlkörper (157) angeordnet ist.

## Claims

1. Electrical machine (10), in particular generator (162), preferably claw-pole generator (162'), having a contact element (134) for electrically connecting electrical components (149) which are present in the form of diodes (150), which contact element comprises a substantially arcuate, electrically non-conductive substrate (135) which has arc end regions (137) and electrical conductors (136) for connecting components, wherein two diodes (150) are connected to each conductor (136) in order to form a rectifier circuit (151), and a plurality of the conductors (136) are arranged in the substrate (135), wherein in each case one of the connected diodes (150) is a positive diode (150') on one side of the conductor (136) and the other of the diodes (150) is a negative diode (150") on the other side of the electrical conductor (136), **characterized in that** at least one further one of the conductors (136) is in the form of an external connecting conductor (138) which runs outside the substrate (135) from one arc end region (137) to the other arc end region (137).

2. Electrical machine (10) according to Claim 1, **characterized in that** the profile of the external connecting conductor (138), which is situated between the arc end regions (137), is in the form of a chord of an arc, an arc and/or an angle.

3. Electrical machine (10) according to either of the preceding claims, **characterized in that**, when the external connecting conductor (138) is in the form of an arc, its arc shape is opposite to the arcuate profile of the contact element (134).

4. Electrical machine (10) according to one of the preceding claims, **characterized in that** at least one conductor (136), preferably the external connecting conductor (138), is a solid conductor (140).

5. Electrical machine (10) according to one of the preceding claims, **characterized by** means (169) which produce a cooling air flow (168) in the electrical machine (10).

6. Electrical machine (10) according to one of the preceding claims, **characterized by** a stator (116) which has at least five winding sections (102), wherein the contact element (134) forms a pentagram circuit (101) with the winding sections (102).

7. Electrical machine (10) according to one of the preceding claims, **characterized in that** at least two of the winding sections (102) of the pentagram circuit (101) are electrically connected to one another by the external conductor element (138).

8. Electrical machine (10) according to one of the preceding claims, **characterized in that** the contact element (134) is a plug-type contact element (142).

9. Electrical machine (10) according to one of the preceding claims, **characterized in that** the contact element (134) forms an electrical rectifier (159) with the components (149).

10. Electrical machine (10) according to one of the preceding claims, **characterized by** a rectifier module (152) which has the rectifier (159), at least one base plate (153) which exhibits a plurality of negative diodes (150"), and at least one heat sink (157) which has a plurality of positive diodes.

11. Electrical machine (10) according to one of the preceding claims, **characterized in that** the contact element (134) is arranged between the base plate (153) and the heat sink (157) in the rectifier module (152).

## Revendications

1. Machine électrique (10), notamment génératrice (162), de préférence génératrice à pôles à griffes (162'), comprenant un élément de contact (134) destiné à la liaison électrique de composants électriques (149) présents sous la forme de diodes (150), lequel se compose d'un substrat (135) sensiblement en forme d'arc, non conducteur d'électricité et présentant des zones d'extrémité d'arc (137) avec des conducteurs électriques (136) servant à la liaison des composants, deux diodes (150) étant raccordées à chaque conducteur (136) en vue de former un circuit redresseur (151) et plusieurs des conducteurs (136) étant disposés dans le substrat (135), l'une des diodes (150) raccordées étant à chaque fois une diode positive (150') d'un côté du conducteur (136) et l'autre des diodes (150) une diode négative (150") de l'autre côté du conducteur (136) électrique, **caractérisée en ce qu'**au moins un autre des conducteurs (136) est configuré sous la forme d'un conducteur de liaison externe (138) qui s'étend endehors du substrat (135) d'une zone d'extrémité d'arc (137) à l'autre zone d'extrémité d'arc (137).

2. Machine électrique (10) selon la revendication 1, **caractérisée en ce que** le tracé du conducteur de liaison externe (138) qui se trouve entre les zones d'extrémité d'arc (137) est configuré à la manière d'une corde d'arc, à la manière d'un arc et/ou en forme d'angle.

3. Machine électrique (10) selon l'une des revendications précédentes, **caractérisée en ce que** dans le cas du conducteur de liaison externe (138) configuré à la manière d'un arc, sa forme d'arc est en sens inverse du tracé en forme d'arc de l'élément de contact (134).

4. Machine électrique (10) selon l'une des revendications précédentes, **caractérisée en ce qu'**au moins un conducteur (136), de préférence le conducteur de liaison externe (138), est un conducteur massif (140).

5. Machine électrique (10) selon l'une des revendications précédentes, **caractérisée par** des moyens (169) qui produisent un courant d'air de refroidissement (168) dans la machine électrique (10).

6. Machine électrique (10) selon l'une des revendications précédentes, **caractérisée par** un stator (116) qui présente au moins cinq branches d'enroulement (102), l'élément de contact (134) formant avec les branches d'enroulement (102) un circuit en pentagramme (101).

7. Machine électrique (10) selon l'une des revendications précédentes, **caractérisée en ce qu'**au moins deux des branches d'enroulement (102) du circuit en pentagramme (101) sont reliées électriquement entre elles par l'élément conducteur externe (138).

8. Machine électrique (10) selon l'une des revendications précédentes, **caractérisée en ce que** l'élément de contact (134) est un élément de contact à enficher (142).

9. Machine électrique (10) selon l'une des revendications précédentes, **caractérisée en ce que** l'élément de contact (134) forme avec les composants (149) un redresseur électrique (159).

10. Machine électrique (10) selon l'une des revendications précédentes, **caractérisée par** un module redresseur (152) qui présente le redresseur (159), au moins une plaque de base (153), laquelle possède une pluralité de diodes négatives (150"), et au moins un dissipateur thermique (157), lequel présente une pluralité de diodes positives.

11. Machine électrique (10) selon l'une des revendications précédentes, **caractérisée en ce que** l'élément de contact (134) est disposé dans le module redresseur (152) entre la plaque de base (153) et le dissipateur thermique (157).
